# EUROPÄISCHE PATENTSCHRIFT

(11) **EP 2 979 853 B1**
(45) Veröffentlichungstag und Bekanntmachung des Hinweises auf die Patenterteilung: **02.05.2018**
(21) Anmeldenummer: 15176853.8
(22) Anmeldetag: 15.07.2015
(51) Int. Cl.: B32B 1/08, F16L 11/11, F16L 11/20, B32B 7/12, B32B 27/08, B32B 27/28, B32B 3/28, B32B 25/08, B32B 27/30, B32B 27/32, B32B 27/34, B32B 27/36, F16L 9/12

(54) **MEHRSCHICHTIGES BLASFORMROHR MIT SÄUREBESTÄNDIGER INNENSCHICHT**
MULTILAYER BLOW MOULDING TUBE WITH ACID RESISTANT INNER LAYER
TUBE DE FORMAGE PAR SOUFFLAGE MULTICOUCHES DOTE D'UNE COUCHE INTERIEURE RESISTANTE AUX ACIDES

(30) Priorität: 29.07.2014 DE 102014110747
(43) Veröffentlichungstag der Anmeldung: 03.02.2016
(73) Patentinhaber: VERITAS AG, 63571 Gelnhausen (DE)
(72) Erfinder: van Hooren, Marc, 63579 Freigericht (DE); Rosemann, Michael, 63594 Hasselroth (DE); Wüsten, Stefan, 63571 Gelnhausen (DE)
(74) Vertreter: Patentship Patentanwaltsgesellschaft mbH

(56) Entgegenhaltungen:
- EP-A1- 1 362 890
- EP-A1- 1 780 241
- WO-A1-2009/071183
- US-A1- 2007 167 552

## Beschreibung

Die vorliegende Erfindung betrifft ein mehrschichtiges Blasformrohr für ein Kraftfahrzeug und ein Verfahren zur Herstellung eines Blasformrohrs, beispielsweise als Ladeluftrohr für ein Kraftfahrzeug.

Bei einer Abgasrückführung von Kraftfahrzeugen entstehen saure Kondensate in einer Ladeluftstrecke. Herkömmliche Blasformrohre können nicht für Ladeluftrohre mit Abgasrückführung in einem Kraftfahrzeug eingesetzt werden, da diese nicht hinreichend säure- und kondensatbeständig sind.

Die Druckschrift WO 2009/071183 A1 offenbart eine mehrschichtige Leitung, insbesondere zum Transport von Kraftstoffen.

Die Druckschrift EP 1 362 890 A1 beschreibt einen gewellten Mehrschicht-Polymer-Schlauch oder Rohrleitung mit reduzierter Längenänderung.

Es ist die der Erfindung zugrundeliegende Aufgabe, ein säure- und kondensatbeständiges Kunststoffrohr für ein Kraftfahrzeug anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Blasformrohr für ein Kraftfahrzeug gelöst, mit einer Innenschicht, die aus einem thermoplastischen Fluorelastomer, einem thermoplastischen Fluorelastomer-Vulkanisat, einem flexiblen Polyphenylensulfid oder einem flexiblen Polyphthalamid gebildet ist; und einer Deckschicht, die die Innenschicht umgibt, zum Stabilisieren der Innenschicht. Dadurch wird der technische Vorteil erreicht, dass ein Ladeluftrohr für ein Kraftfahrzeug mit geringem Materialaufwand herstellbar ist, das im Inneren eine chemisch beständige Barriereschicht aufweist und dadurch vom Kondensat einer Abgasrückführung nicht angegriffen wird.

In einer vorteilhaften Ausführungsform des Blasformrohrs ist die Deckschicht aus einem thermoplastischen Elastomer, einem vernetzten thermoplastischen Elastomer oder einem schlagzähen Thermoplast gebildet. Dadurch wird der technische Vorteil erreicht, dass die Deckschicht eine hohe Stabilität und Festigkeit aufweist. Das Blasformrohr umfasst einen gewellten Wandabschnitt. Dadurch wird der technische Vorteil erreicht, dass das Blasformrohr elastisch verformt werden kann und Schwingungen kompensieren kann. Die Innenschicht des Blasformrohrs liegt gewellt an der Innenseite des gewellten Wandabschnittes an. Dadurch wird der technische Vorteil erreicht, dass der gewellte Abschnitt mit geringem Materialeinsatz vor Säure und Kondensat geschützt werden kann.

In einer weiteren vorteilhaften Ausführungsform des Blasformrohrs umfasst das Blasformrohr eine Zwischenschicht, die zwischen der Innenschicht und der Deckschicht angeordnet ist. Dadurch wird der technische Vorteil erreicht, dass die Stabilität des Blasformrohres durch eine zusätzliche Schicht erhöht wird.

In einer weiteren vorteilhaften Ausführungsform des Blasformrohrs ist die Zwischenschicht aus einem thermoplastischen Elastomer, einem vernetzten thermoplastischen Elastomer oder einem schlagzähen Thermoplast gebildet. Dadurch wird der technische Vorteil erreicht, dass die Zwischenschicht eine hohe Festigkeit aufweist.

In einer weiteren vorteilhaften Ausführungsform des Blasformrohrs umfasst die Zwischenschicht einen Haftvermittler zum Erhöhen der Haftfestigkeit zwischen der Zwischenschicht und der Innenschicht oder zwischen der Zwischenschicht und der Deckschicht. Dadurch wird der technische Vorteil erreicht, dass ein gegenseitiges Ablösen der Schichten verhindert wird.

In einer weiteren vorteilhaften Ausführungsform des Blasformrohrs ist der Haftvermittler aus der Gruppe der reaktiven, endgruppenfunktionalisierten oder endgruppenhaltigen Polyamide, Polyester oder Carbonsäurederivate, oder aus der Gruppe der reaktiven Coagentien wie beispielsweise Trimethylpropantrimethacrylat TRIM, Triallylisocyanurat TAIC, Triallylcyanurat TAC oder Trimethallylisocyanurat TMAIC, oder aus der Gruppe der maleinsäuregepfropften Copolymere oder reaktiven Epoxidharze. Dadurch wird der technische Vorteil erreicht, dass besonders wirksame Haftvermittler eingesetzt werden.

In einer weiteren vorteilhaften Ausführungsform des Blasformrohrs weist die Innenschicht eine Dicke von 0,1 mm bis 0,5 mm, vorzugsweise 0,1 mm bis 0,2mm, auf. Dadurch wird der technische Vorteil erreicht, dass ein Durchtritt von Säure oder Kondensat durch die Innenschicht verhindert wird.

In einer weiteren vorteilhaften Ausführungsform des Blasformrohrs weist die Deckschicht eine Dicke von 1,3 mm bis 2,8 mm, vorzugsweise 1,3 mm bis 2,3 mm, auf. Dadurch wird der technische Vorteil erreicht, dass das Blasformrohr eine hohe Stabilität bei gleichzeitig niedrigem Materialeinsatz aufweist.

In einer weiteren vorteilhaften Ausführungsform des Blasformrohrs weist das Blasformrohr eine Dicke von 1 mm bis 3 mm, vorzugsweise 1,5 mm bis 2,5 mm, auf. Dadurch wird ebenfalls der technische Vorteil erreicht, dass das Blasformrohr eine hohe Stabilität bei gleichzeitig niedrigem Materialeinsatz aufweist.

Gemäß einem zweiten Aspekt der Erfindung wird die Aufgabe durch ein Verfahren zur Herstellung eines Blasformrohres ein Verfahren gelöst, mit den Schritten eines Extrudierens eines Rohlings mit einer Deckschicht und einer Innenschicht aus einem thermoplastischen Fluorelastomer, einem thermoplastischen Fluorelastomer-Vulkanisat, einem flexiblen Polyphenylensulfid oder einem flexiblen Polyphthalamid gebildet ist, wobei der Rohling einen gewellten Wandabschnitt umfasst und wobei die Innenschicht gewellt an der Innenseite des gewellten Wandabschnittes anliegt; eines Anordnens des Rohlings in einem Innenraum eines Formwerkzeugs, der die Form des Blasformrohr vorgibt; und eines Beaufschlagens des Rohlings mit Druckluft zum Ausdehnen des Rohlings innerhalb des Innenraums, um das Blasformrohr zu formen. Dadurch wird der technische Vorteil erreicht, dass das Blasformrohr auf einfache Weise hergestellt werden kann.

In einer vorteilhaften Ausführungsform des Verfahrens umfasst das Verfahren den Schritt eines Extrudierens einer Zwischensicht zwischen der Innenschicht und der Deckschicht. Dadurch wird der technische Vorteil erreicht, dass die Festigkeit des Blasformrohrs erhöht und eine weitere funktionale Schicht in das Blasformrohr integriert wird.

In einer weiteren vorteilhaften Ausführungsform des Verfahrens ist die Zwischenschicht die Zwischenschicht aus einem Haftvermittler, einem haftungsmodifizierten thermoplastischen Elastomer, einem haftungsmodifiziertem, vernetzten thermoplastischen Elastomer oder einem Thermoplast gebildet. Dadurch wird der technische Vorteil erreicht, dass ein gegenseitiges Ablösen der Schichten verhindert wird.

In einer weiteren vorteilhaften Ausführungsform des Verfahrens ist ein Haftvermittler in der Innenschicht oder der Deckschicht integriert. Dadurch wird beispielsweise der technische Vorteil erreicht, dass auf eine Zwischenschicht mit Haftvermittler verzichtet werden kann.

In einer weiteren vorteilhaften Ausführungsform des Verfahrens wird die Deckschicht aus einem thermoplastischen Elastomer oder einem haftungsmodifizierten thermoplastischen Elastomer gebildet. Dadurch wird beispielsweise der technische Vorteil erreicht, dass die Deckschicht elastisch ist und sich beim anschließenden Beaufschlagen mit Druckluft ausdehnen kann.

Ausführungsbeispiele der Erfindung sind in den Zeichnungen dargestellt und werden im Folgenden näher beschrieben.

Es zeigen:
Fig. 1 eine schematische Ansicht eines Blasformrohrs; und
Fig. 2 ein Blockdiagramm zur Herstellung des Blasformrohrs.

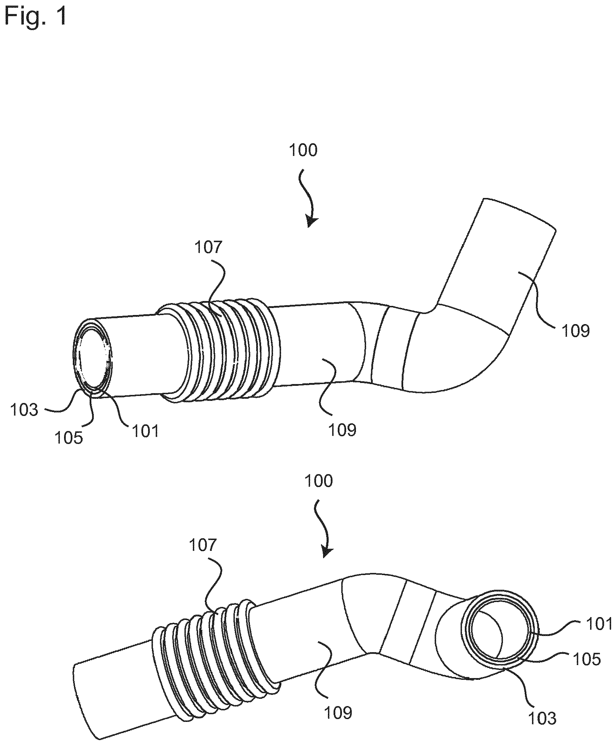

Fig. 1 zeigt eine schematische Ansicht eines mehrschichtigen Blasformrohrs 100 mit kreisförmigem Querschnitt, das mittels eines Blasformverfahrens hergestellt worden ist. Das Blasformrohr 100 dient beispielsweise als Ladeluftrohr für den Verbrennungsmotor eines Kraftfahrzeugs, in dem die Ladeluft geführt wird. Das Blasformrohr 100 umfasst gerade Wandabschnitte 109 und ringförmige, gewellte Wandabschnitte 107. In den gewellten Wandabschnitten 107 weist das Blasformrohr 100 eine höhere Elastizität in axialer und radialer Richtung auf, so dass ein Versatz zwischen den Anschlüssen auf einfache Weise kompensiert werden kann. In dem geraden Wandabschnitt 109 weist das Blasformrohr 100 hingegen eine hohe Festigkeit auf.

Das Blasformrohr 100 umfasst eine Innenschicht 101 als Sperrschicht, die aus einem thermoplastischen Fluorelastomer oder einem thermoplastischen Fluorelastomer-Vulkanisat hergestellt ist. Die Innenschicht 101 bildet eine säure- und kondensatbeständige Sperrschicht und liegt gewellt an der Innenseite des gewellten Wandabschnittes an. Dadurch kann das Blasformrohr 100 als Ladeluftrohr für ein Kraftfahrzeug mit Abgasrückführung verwendet werden.

Zudem umfasst das Blasformrohr 100 eine Deckschicht 103, die um die Innenschicht 101 herum angeordnet ist. Die Deckschicht 103 ist aus einem thermoplastischen Elastomer TPE oder einem haftungsmodifizierten thermoplastischen Elastomer TPV oder aus einem schlagzähen, flexiblen Thermoplast gebildet.

Zusätzlich ist zwischen der Innenschicht 101 und der Deckschicht 103 eine Zwischenschicht 105 vorgesehen. Die Zwischenschicht 105 ist aus einem Haftvermittler oder einem haftungsmodifiziertem thermoplastischen Elastomer (TPE, TPV) oder aus einem haftungsmodifiziertem schlagzähen, flexiblen Thermoplast gebildet.

Der Haftvermittler kann jedoch auch in der Deckschicht 103 und/oder der Innenschicht 101 integriert sein. Ist der Haftvermittler in der Deckschicht 103 und/oder in der Innenschicht 101 integriert, so kann auf die Zwischenschicht 105 verzichtet werden.

Die Innenschicht 101 ist beispielsweise aus einem thermoplastischen Fluorelastomer-Vulkanisat F-TPV, einem thermoplastischen Fluorelastomer F-TPE, flexiblen Polyphenylensulfid PPS oder flexiblen Polyphthalamid PPA gebildet.

Die haftmodifizierte Zwischenschicht 105 kann aus einem thermoplastischen Elastomer-Vulkanisat TPV gebildet sein, beispielsweise aus Polypropylen mit Ethylen-Propylen-DienKautschuk oder Isobuten-Isopren-Kautschuk IIR, Polyethylen PE mit Ethylen-Propylen-DienKautschuk EPDM oder Isobuten-Isopren-Kautschuk IIR, Polyamid PA mit Nitrilkautschuk NBR oder hydriertem Acrylnitrilbutadien-Kautschuk HNBR, Polyamid PA mit EthylenVinylacetat-Kautschuk EVM oder Acrylat-Kautschuk ACM.

Der Haftvermittler ist beispielsweise aus der Gruppe der reaktiven, endgruppenfunktionalisierten oder endgruppenhaltigen Polyamide, Polyester oder Carbonsäurederivate, oder aus der Gruppe der reaktiven Coagentien, wie beispielsweise Trimethylpropantrimethacrylat TRIM, Triallylisocyanurat TAIC, Triallylcyanurat TAC oder Trimethallylisocyanurat TMAIC, oder aus der Gruppe der maleinsäuregepfropften Copolymere oder reaktive Epoxidharze gewählt.

Die haftmodifizierte Zwischenschicht 105 kann daneben aus einem thermoplastischen Elastomer TPE, wie beispielsweise Styrol-Ethylen-Butylen-Styrol SEBS oder einem thermoplastische Copolyester TPC, oder einem schlagzähen Thermoplast gebildet sein, wie beispielsweise Polyamid PA, Polybutylenterephthalat PBT oder Polyolefinen (z.B. Polypropylen). Die Deckschicht 103 ist analog zu der Zwischenschicht 105 ohne Haftungsmodifizierung gebildet.

Die Schichtstärke des Blasformrohrs 100 liegt zwischen 1 mm bis 3 mm, vorzugsweise 1,5 mm bis 2,5 mm. Die Schichtstärke der Innenschicht 101 liegt zwischen 0,1 mm bis 0,5 mm, vorzugsweise 0,1 mm bis 0,2mm. Die Schichtstärke der Zwischenschicht 103 liegt zwischen 0,1 mm bis 0,5 mm, vorzugsweise 0,1 mm bis 0,2 mm. Die Schichtstärke der Deckschicht 103 liegt zwischen 1,3 mm bis 2,8 mm, vorzugsweise 1,3 bis 2,3 mm.

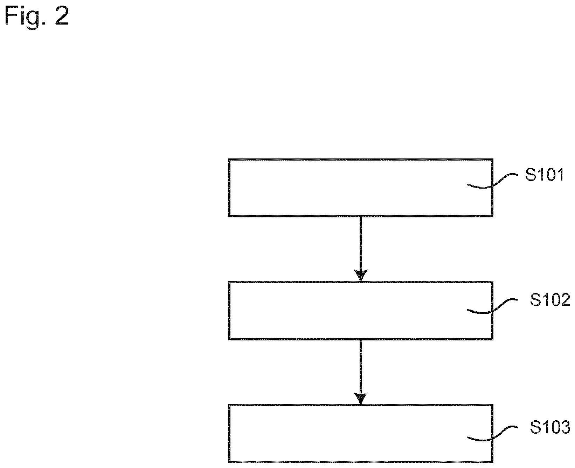

Fig. 2 zeigt ein Blockdiagramm zur Herstellung des Blasformrohrs 100. In einem ersten Schritt S101 wird zunächst ein Rohling mit der Innenschicht 101 aus dem thermoplastischen Fluorelastomer F-TPE oder dem thermoplastischen Fluorelastomer-Vulkanisat F-TPV zusammen mit der Deckschicht 103 extrudiert. Anschließend wird in Schritt S102 der Rohling in einem Innenraum eines Formwerkzeugs angeordnet. Der Innenraum des Formwerkzeugs gibt die Form des Blasformrohrs 100 vor. Anschließend wird in Schritt S103 der Rohling mit Druckluft beaufschlagt. Dadurch dehnt sich der Rohling innerhalb des Innenraums aus, so dass das Blasformrohr 100 seine endgültige Form erhält. Im Inneren des blasgeformten Blasformrohr 100 ist die chemisch beständige Schicht aus thermoplastischen Fluorelastomer F-TPE oder thermoplastischen Fluorelastomer-Vulkanisat F-TPV gebildet.

Durch das Verfahren wird somit ein koextrudiertes Blasformrohr 100 erzeugt, das eine Innenschicht 101 aus F-TPV als zusätzliche chemisch beständige Barriereschicht aufweist. Dadurch wird ein effizienter Einsatz von Blasformrohren auf Basis von TPE bzw. TPV ermöglicht. Durch dieses Verfahren lassen sich säure- und kondensatbeständige Blasformrohre 100 mit steifen, geraden und gewellten Wandabschnitten 107 und 109 als Ladeluftrohre für Kraftfahrzeuge herstellen. Das Blasformrohr 100 beruht auf einem coextrudierten Blasformrohr mit einer zusätzlichen Sperrschicht aus F-TPE oder F-TPV und einem darauf abgestimmten Haftsystem.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Blasformrohr
- 101: Innenschicht
- 103: Deckschicht
- 105: Zwischenschicht
- 107: gewellter Wandabschnitt
- 109: gerader Wandabschnitt

- S101: Verfahrensschritt
- S102: Verfahrensschritt
- S103: Verfahrensschritt

## Patentansprüche

1. Blasformrohr (100) für ein Kraftfahrzeug, mit:
einer Innenschicht (101), die aus einem thermoplastischen Fluorelastomer, einem thermoplastischen Fluorelastomer-Vulkanisat, einem flexiblen Polyphenylensulfid oder einem flexiblen Polyphthalamid gebildet ist; und
einer Deckschicht (103), die die Innenschicht (101) umgibt, zum Stabilisieren der Innenschicht (101), wobei das Blasformrohr (100) einen gewellten Wandabschnitt (107) umfasst, und wobei die Innenschicht (101) gewellt an der Innenseite des gewellten Wandabschnittes (107) anliegt.

2. Blasformrohr (100) nach Anspruch 1, wobei die Deckschicht (103) aus einem thermoplastischen Elastomer, einem vernetzten thermoplastischen Elastomer oder einem schlagzähen Thermoplast gebildet ist.

3. Blasformrohr (100) nach einem der vorangehenden Ansprüche, wobei das Blasformrohr (100) eine Zwischenschicht (105) umfasst, die zwischen der Innenschicht (101) und der Deckschicht (103) angeordnet ist.

4. Blasformrohr (100) nach Anspruch 3, wobei die Zwischenschicht (105) aus einem thermoplastischen Elastomer, einem vernetzten thermoplastischen Elastomer oder einem schlagzähen Thermoplast gebildet ist.

5. Blasformrohr (100) nach Anspruch 3 oder 4, wobei die Zwischenschicht (105) einen Haftvermittler zum Erhöhen der Haftfestigkeit zwischen der Zwischenschicht (105) und der Innenschicht (101) oder zwischen der Zwischenschicht (105) und der Deckschicht (103) umfasst.

6. Blasformrohr (100) nach Anspruch 5, wobei der Haftvermittler aus der Gruppe der reaktiven, endgruppenfunktionalisierten oder endgruppenhaltigen Polyamide, Polyester oder Carbonsäurederivate, oder aus der Gruppe der reaktiven Coagentien, vorzugsweise Trimethylpropantrimethacrylat, Triallylisocyanurat, Triallylcyanurat oder Trimethallylisocyanurat, oder aus der Gruppe der maleinsäuregepfropften Copolymere oder reaktiven Epoxidharze ist.

7. Blasformrohr (100) nach einem der vorangehenden Ansprüche, wobei die Innenschicht (101) eine Dicke von 0,1 mm bis 0,5 mm, vorzugsweise 0,1 mm bis 0,2mm, aufweist.

8. Blasformrohr (100) nach einem der vorangehenden Ansprüche, wobei die Deckschicht (103) eine Dicke von 1,3 mm bis 2,8 mm, vorzugsweise 1,3 mm bis 2,3mm, aufweist.

9. Blasformrohr (100) nach einem der vorangehenden Ansprüche, wobei das Blasformrohr (100) eine Dicke von 1 mm bis 3 mm, vorzugsweise 1,5 mm bis 2,5 mm, aufweist.

10. Verfahren zur Herstellung eines Blasformrohres (100), mit den Schritten:
Extrudieren (S101) eines Rohlings mit einer Deckschicht (103) und einer Innenschicht (101), die aus einem thermoplastischen Fluorelastomer, einem thermoplastischen Fluorelastomer-Vulkanisat, einem flexiblen Polyphenylensulfid oder einem flexiblen Polyphthalamid gebildet ist, wobei der Rohling einen gewellten Wandabschnitt (107) umfasst, und wobei die Innenschicht (101) gewellt an der Innenseite des gewellten Wandabschnittes (107) anliegt;
Anordnen (S102) des Rohlings in einem Innenraum eines Formwerkzeugs, der die Form des Blasformrohrs (100) vorgibt; und
Beaufschlagen (S103) des Rohlings mit Druckluft zum Ausdehnen des Rohlings innerhalb des Innenraums, um das Blasformrohr (100) zu formen.

11. Verfahren nach Anspruch 10, weiter mit dem Schritt eines Extrudierens einer Zwischensicht (105) zwischen der Innenschicht (101) und der Deckschicht (103).

12. Verfahren nach Anspruch 11, wobei die Zwischenschicht (105) aus einem Haftvermittler, einem haftungsmodifizierten thermoplastischen Elastomer, einem haftungsmodifiziertem, vernetzten thermoplastischen Elastomer oder einem Thermoplast gebildet wird.

13. Verfahren nach einem der Ansprüche 10 bis 12, wobei ein Haftvermittler in der Innenschicht (101) oder der Deckschicht (103) integriert ist.

## Claims

1. Blow-moulded pipe (100) for a motor vehicle, with:
an internal layer (101) composed of a thermoplastic fluoroelastomer, a thermoplastic fluoroelastomer vulcanisate, a flexible polyphenylene sulfide or a flexible polyphthalamide; and
an outer layer (103) which surrounds the internal layer (101) in order to stabilize the internal layer (101), where the blow-moulded pipe (100) comprises a corrugated wall section (107) and where the internal layer (101) has corrugations where it is in contact with the internal side of the corrugated wall section (107).

2. Blow-moulded pipe (100) according to Claim 1, where the outer layer (103) is composed of a thermoplastic elastomer, a crosslinked thermoplastic elastomer or an impact-resistant thermoplastic.

3. Blow-moulded pipe (100) according to any of the preceding claims, where the blow-moulded pipe (100) comprises an intervening layer (105) arranged between the internal layer (101) and the outer layer (103).

4. Blow-moulded pipe (100) according to Claim 3, where the intervening layer (105) is composed of a thermoplastic elastomer, a crosslinked thermoplastic elastomer or an impact-resistant thermoplastic.

5. Blow-moulded pipe (100) according to Claim 3 or 4, where the intervening layer (105) comprises an adhesion promoter for increasing the adhesion between the intervening layer (105) and the internal layer (101) or between the intervening layer (105) and the outer layer (103).

6. Blow-moulded pipe (100) according to Claim 5, where the adhesion promoter is from the group of the reactive, end-group-functionalized or end-group-containing polyamides, polyesters or carboxylic acid derivatives, or from the group of the reactive co-agents, preferably trimethylpropane trimethacrylate, triallyl isocyanurate, triallyl cyanurate or trimethallyl isocyanurate, or from the group of the maleic-acid-grafted copolymers or reactive epoxy resins.

7. Blow-moulded pipe (100) according to any of the preceding claims, where the thickness of the internal layer (101) is from 0.1 mm to 0.5 mm, preferably 0.1 mm to 0.2 mm.

8. Blow-moulded pipe (100) according to any of the preceding claims, where the thickness of the outer layer (103) is from 1.3 mm to 2.8 mm, preferably 1.3 mm to 2.3 mm.

9. Blow-moulded pipe (100) according to any of the preceding claims, where the thickness of the blow-moulded pipe (100) is from 1 mm to 3 mm, preferably 1.5 mm to 2.5 mm.

10. Process for the production of a blow-moulded pipe (100), with the following steps:
extrusion (S101) of a parison with an outer layer (103) and an internal layer (101), which is composed of a thermoplastic fluoroelastomer, a thermoplastic fluoroelastomer vulcanisate, a flexible polyphenylene sulfide or a flexible polyphthalamide, where the parison has a corrugated wall section (107), and where the internal layer (101) has corrugation where it is in contact with the internal side of the corrugated wall section (107);
arrangement (S102) of the parison in an internal cavity of a mould, where said cavity prescribes the shape of the blow-moulded pipe (100); and
application (S103) of compressed air to the parison in order to expand the parison within the internal cavity, in order to mould the blow-moulded pipe (100).

11. Process according to Claim 10, moreover with the step of extrusion of an intervening layer (105) between the internal layer (101) and the outer layer (103).

12. Process according to Claim 11, where the intervening layer (105) is composed of an adhesion promoter, an adhesion-modified thermoplastic elastomer, an adhesion-modified, crosslinked thermoplastic elastomer or a thermoplastic.

13. Process according to any of Claims 10 to 12, where there is an adhesion promoter integrated in the internal layer (101) or the outer layer (103).

## Revendications

1. Tube moulé par soufflage (100) pour un véhicule automobile, comprenant :
une couche intérieure (101), qui est formée par un élastomère fluoré thermoplastique, un vulcanisat d'élastomère fluoré thermoplastique, un polysulfure de phénylène flexible ou un polyphtalamide flexible ; et
une couche de recouvrement (103), qui entoure la couche intérieure (101), pour la stabilisation de la couche intérieure (101), le tube moulé par soufflage (100) comprenant une section de paroi ondulée (107) et la couche intérieure (101) étant ajustée sous forme ondulée au côté intérieur de la section de paroi ondulée (107).

2. Tube moulé par soufflage (100) selon la revendication 1, dans lequel la couche de recouvrement (103) est formée par un élastomère thermoplastique, un élastomère thermoplastique réticulé ou un thermoplastique résistant aux impacts.

3. Tube moulé par soufflage (100) selon l'une quelconque des revendications précédentes, dans lequel le tube moulé par soufflage (100) comprend une couche intermédiaire (105), qui est agencée entre la couche intérieure (101) et la couche de recouvrement (103).

4. Tube moulé par soufflage (100) selon la revendication 3, dans lequel la couche intermédiaire (105) est formée par un élastomère thermoplastique, un élastomère thermoplastique réticulé ou un thermoplastique résistant aux impacts.

5. Tube moulé par soufflage (100) selon la revendication 3 ou 4, dans lequel la couche intermédiaire (105) comprend un promoteur d'adhésion pour augmenter l'adhérence entre la couche intermédiaire (105) et la couche intérieure (101) ou entre la couche intermédiaire (105) et la couche de recouvrement (103).

6. Tube moulé par soufflage (100) selon la revendication 5, dans lequel le promoteur d'adhésion est du groupe constitué par les dérivés d'acides carboxyliques, les polyesters ou les polyamides réactifs fonctionnalisés par des groupes terminaux ou contenant des groupes terminaux ou du groupe constitué par les co-agents réactifs, de préférence le triméthacrylate de triméthylpropane, l'isocyanurate de triallyle, le cyanurate de triallyle ou l'isocyanurate de triméthallyle, ou du groupe constitué par les copolymères greffés avec de l'acide maléique ou les résines époxydes réactives.

7. Tube moulé par soufflage (100) selon l'une quelconque des revendications précédentes, dans lequel la couche intérieure (101) présente une épaisseur de 0,1 mm à 0,5 mm, de préférence de 0,1 mm à 0,2 mm.

8. Tube moulé par soufflage (100) selon l'une quelconque des revendications précédentes, dans lequel la couche de recouvrement (103) présente une épaisseur de 1,3 mm à 2,8 mm, de préférence de 1,3 mm à 2,3 mm.

9. Tube moulé par soufflage (100) selon l'une quelconque des revendications précédentes, dans lequel le tube moulé par soufflage (100) présente une épaisseur de 1 mm à 3 mm, de préférence de 1,5 mm à 2,5 mm.

10. Procédé de fabrication d'un tube moulé par soufflage (100), comprenant les étapes suivantes :
l'extrusion (S101) d'une ébauche comprenant une couche de recouvrement (103) et une couche intérieure (101), qui est formée par un élastomère fluoré thermoplastique, un vulcanisat d'élastomère fluoré thermoplastique, un polysulfure de phénylène flexible ou un polyphtalamide flexible, l'ébauche comprenant une section de paroi ondulée (107) et la couche intérieure (101) étant ajustée sous forme ondulée au côté intérieur de la section de paroi ondulée (107) ;
la disposition (S102) de l'ébauche dans une cavité d'un outil de moulage qui fixe la forme du tube moulé par soufflage (100) ; et
l'exposition (S103) de l'ébauche à de l'air comprimé pour la dilatation de l'ébauche dans la cavité afin de former le tube moulé par soufflage (100).

11. Procédé selon la revendication 10, comprenant en outre l'étape d'extrusion d'une couche intermédiaire (105) entre la couche intérieure (101) et la couche de recouvrement (103).

12. Procédé selon la revendication 11, dans lequel la couche intermédiaire (105) est formée par un promoteur d'adhésion, un élastomère thermoplastique à adhésion modifiée, un élastomère thermoplastique réticulé à adhésion modifiée ou un thermoplastique.

13. Procédé selon l'une quelconque des revendications 10 à 12, dans lequel un promoteur d'adhésion est intégré dans la couche intérieure (101) ou la couche de recouvrement (103).
